# EUROPEAN PATENT APPLICATION

(11) **EP 0 935 358 A2**
(43) Date of publication of application: **11.08.1999**
(21) Application number: 99102132.0
(22) Date of filing: 03.02.1999
(51) Int. Cl.: H04B 10/213

(54) **Bi-directional configurable optical add/drop circuit**

(30) Priority: 06.02.1998 US 20248
(71) Applicant: JDS FITEL INC., Nepean, Ontario K2G 5W8 (CA)
(72) Inventor: Li, Jinghuri, Ottawa, Ontario K2E 5M6 (CA); Visvanatha, Kumar, Kanata, Ontario K2M 2G6 (CA)
(74) Representative: Frei, Alexandra Sarah

(57) **Abstract**

The present invention relates to a bi-directional configurable optical add/drop circuit. A symmetrical arrangement of serially coupled wavelength specific filters which include central add and drop ports isolated in both directions by filters provides a bi-directional circuit. Add and drop ports are coupled by a reflecting means, such as movable mirrors, or a movable double sided mirror. Alternatively, redirecting means comprise an opto-electronic, or other means, for providing a selectively reflective or transmissive interface. The reflecting means has a first position to direct a channel passed through a first filter to the drop port. If a new channel is added, the reflecting means couples the new channel through a second filter to the output port. In a second position, the reflecting means is moved from the beam path, permitting the channel to pass through the circuit without being dropped. In this way selected channels can be dropped, while others are allowed to pass. The reflecting means may be rotated or a second redirecting means substituted to reconfigure the circuit for signals propagating in the reverse direction to provide bi-directional coupling to the drop receiver and add transmitter. By applying absorption material to the surface of the reflecting means, an attenuation function can be added to the add/drop circuit. The configuration can be modified in operation. Numerous add/drop circuits can be arranged in parallel to address a large number of channels. A number of broad band filters first separate and direct selected channels to each add/drop circuit.

## Description

### Field of the Invention

The present invention relates to a selectively configurable optical add/drop circuit, particularly to a bi-directional system which is configurable to separately monitor a plurality of channels.

### Background of the Invention

As more efficient use is made of available bandwidth in optical networks by DWDM (dense wavelength division multiplexing), a means for monitoring, adjusting, removing or replacing individual channels is needed.

Conventional add/drop optical circuits provide only a fixed configuration which does not allow the flexibility to change which channels are selected. These circuits typically sequentially drop one channel at a time. It is not possible for particular channels corresponding to filtered wavelengths to be passed through the circuit without being dropped. In addition, existing add/drop systems do not permit bi-directional configurable transmission, and thus cannot take advantage of a significant benefit of WDM systems.

In a conventional multiple channel add/drop system a significant amount of hardware including fiber tubes, lenses and filters are required for each add or drop node, and consequently also a large amount of space is required to accommodate these components. For each channel that may be added or dropped two or more filter assemblies are required, including two fiber tubes surrounding two quarter pitch graded index (GRIN) lenses having a filter element disposed there-between. An additional filter assembly to assure that any remaining signal is extinguished further increases the size.

It is an object of the present invention to overcome the limitations of the prior art, by providing an add/drop circuit, which is configurable for selected channels independent of one another. It is a further object to provide a circuit operable in a bi-directional system. It is a further object to provide an add/drop circuit with a attenuation function. It is a further object to provide an add/drop circuit in a more compact physical layout, which encounters less loss. It is a further object to provide a means to vary the optical power level of the add or drop channel within the device.

### Summary of the Invention

The present invention has found that a selectively operative redirecting means, such as a movable reflective means can be used as a splice within a filter assembly to insert add and drop ports within a pass through filter assembly. Fewer tubes and lenses are required, reducing size requirements and resulting in lower loss. Advantageously, a symmetric configuration permits bi-directional operation.

Accordingly, the present invention provides a configurable add/drop optical circuit, comprising:
an optical filter arrangement comprising:
   a pair of spaced apart substantially collimating lenses, the lenses having optical waveguides optically coupled thereto;
   a filter optically coupled with an inwardly facing end face of each of the spaced apart lenses, said filters having a substantially same wavelength response; and, a movable reflective optical element disposed between the filters.

A further preferred embodiment provides a configurable optical filtering add/drop optical circuit comprising:
an input waveguide;
an output waveguide optically coupled thereto;
at least one wavelength sensitive filter assembly for passing at least a predetermined wavelength of light optically coupling the input waveguide with the output waveguide;
a bypass waveguide for transmitting at least one channel reflected by the at least one filter assembly to the output waveguide; and
a reflective means for selectively redirecting a wavelength of light passed through the filter, or allowing the channel to propagate to the output waveguide.

A still further embodiment of the present invention provides an optical filtering system comprising:
a pair of optical waveguides for carrying a signal, comprised of a plurality of wavelengths corresponding to a plurality of channels, in a single or opposite directions;
at least one filter assembly means, for optically coupling the pair of optical waveguides,
a receiver for receiving at least one of the channels;
a transmitter for adding a signal corresponding to one of the channels to the system;
   said filter assembly having a first port associated with one of the waveguides and a second port associated with the other waveguide; a pair of wavelength specific filters for transmitting a selected channel and reflecting the others; and movable redirecting means between the first and second ports for redirecting a channel passed through a filter from the waveguide through the first to the receiver, and for optionally redirecting a new channel from the transmitter to the second port to couple with the associated waveguide;
   whereby the redirecting means is selectively operative between a first position to pass a signal between the first and second ports, and a second position to redirect a signal.

In a still further preferred embodiment, the present invention provides an optical filtering system comprising:
a waveguide for transmitting a signal comprising a plurality of wavelengths corresponding to a plurality of channels;
a series of wavelength specific filter assemblies interrupting signal transmission on the waveguide for sequentially isolating a number of the plurality of channels;
   said filter assemblies comprising:
   input port for receiving the signal from the waveguide;
   first wavelength specific filter means for passing a desired channel and reflecting the remaining channels from the input port;
   reflective means selectively operable to couple an isolated channel with a drop receiver and optionally to couple a new channel from an add transmitter;
   second wavelength specific filter means for passing a desired channel to an output port coupled with the waveguide and for reflecting other channels to couple with the waveguide.

Another preferred embodiment of the present invention comprises An optical filtering system comprising:
a waveguide for carrying a signal comprised of a plurality of wavelengths corresponding to a plurality of channels;
a number of broadband filters arranged sequentially, each for passing a portion of the plurality of channels and reflecting the others to a next sequential broadband filter;
a configurable add/drop circuit associated with each broadband filter including a wavelength specific filter assembly for each channel of the portion passed by the broadband filter, said filter assembly comprising:
   a pair of spaced apart substantially collimating lenses, the lenses having optical waveguides optically coupled thereto;
   a filter optically coupled with an inwardly facing end face of each of the spaced apart lenses, said filters having a substantially same wavelength response; and,
   a movable reflective optical element disposed between the filters.

Advantageously, the present invention provides an add/drop circuit that is configurable for each channel independently. Further the add/drop circuit according to the present invention is re-configurable in operation in response to sample results, or to changing requirements.

It is a further advantage of the present invention that the configurable add/drop circuit can operate uni-directionally or bi-directionally.

Further advantages will be apparent to those skilled in the art with reference to the detailed description of preferred embodiments and the accompanying drawings, which illustrate preferred embodiments of the invention by example only, in which

### Brief Description of the Figures

Figure 1 is a schematic illustration of a conventional two-wavelength add/drop circuit;
Figure 2 is a schematic illustration of a single wavelength bi-directional configurable add/drop filter assembly according to the present invention;
Figure 3 is a schematic illustration of a multiple wavelength bi-directional configurable optical add/drop module incorporating the filter assemblies of Figure 2; and,
Figure 4 is a schematic illustration of a cascaded embodiment incorporating the module of Figure 2 in a 16 channel add/drop circuit.

Like numerals are used throughout to designate like elements.

### Detailed Description of Preferred Embodiments

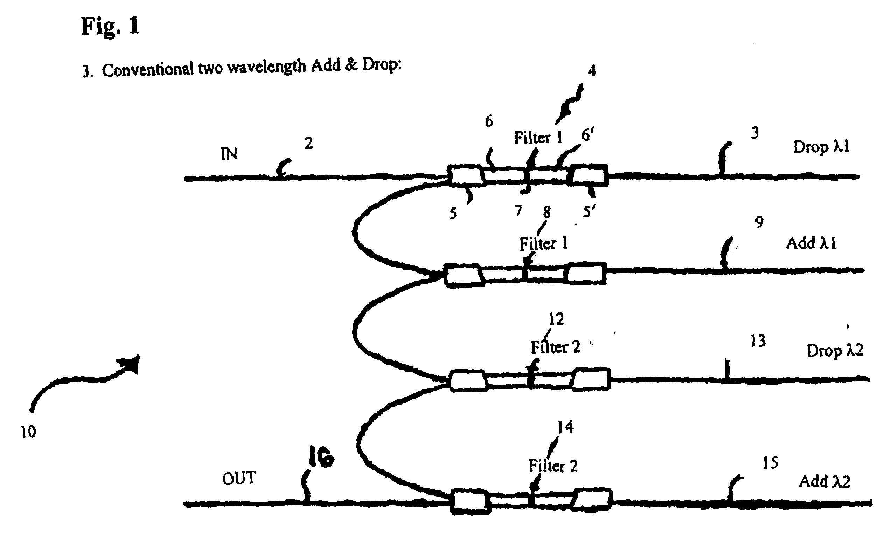

A conventional two channel add/drop circuit is shown generally at 10, in Figure 1. A first input optical fiber 2 conducts light of at least two channels to a first filter assembly 4 including a pair of fiber tubes 5, 5', a pair of quarter pitch GRIN lenses 6, 6' and a filter 7 adapted to pass a first channel having a wavelength λ1, and to reflect other wavelengths of light. Optical fiber 3 is a drop port for the first channel having a wavelength λ1. Reflected light from filter 7 propagates to a second filter assembly 8, identical to filter assembly 4, through which a new first channel having a wavelength λ1 is added by launching a beam into optical fiber 9. Newly added channel 1 and reflected other wavelengths are conducted to a third filter assembly 12. Filter assembly 12 is essentially identical to assemblies 4 and 8, however having a different wavelength response, being adapted to pass a second channel having a wavelength λ2. Optical fiber 13 is a drop port for the second channel λ2. A fourth filter assembly 14, identical to filter assembly 12, is provided with an input fiber 15 to add a new channel λ2. Other wavelengths, including λ1, are reflected by filter assembly 14 and continue to output port 16 with new channel λ2 The dropped or added channels are fixed for this type of circuit. The particular wavelength signal must be dropped, and a new same wavelength may be added.

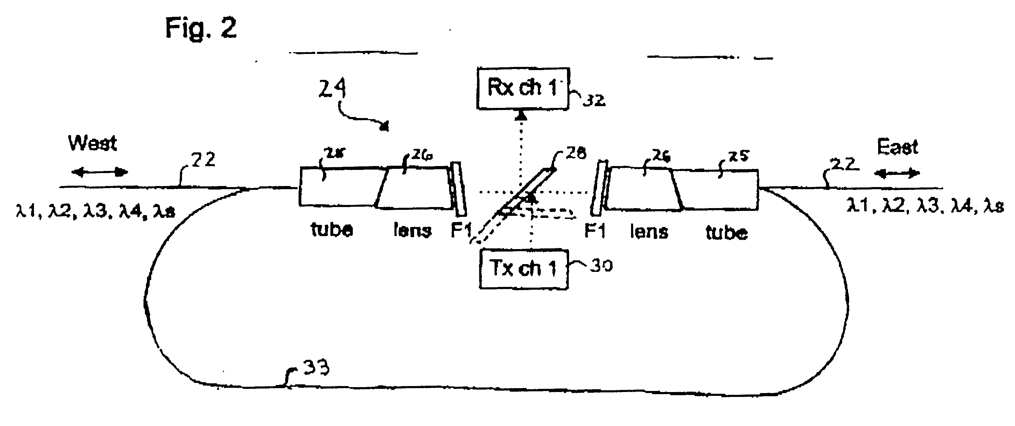

Figure 2 illustrates a single filter assembly 24 according to the present invention. Input/output fiber 22 carry a signal comprising a plurality of wavelengths corresponding to a plurality of channels. The fiber 22 is interrupted by the filter assembly 24. The fiber 22 is conveniently coupled using a tube 25, or the like, to a collimating lens 26, such as a graded index (GRIN) lens, constituting input and output ports to the filter assembly 24. As the filter structure is symmetrical, the designation input or output is determined by the direction the wavelength of a specific channel is propagating. As illustrated, the channel of wavelength λ1 is propagating from west to east. Each lens is optically coupled to a filter F1, both filters having substantially the same wavelength response. Between the filters F1 is a reflective element 28, such as a double-sided mirror. The reflective element 28 has two states: a first for reflecting and redirecting a beam passing through filter F1, and a second permitting a beam to pass through the second filter F1 and couple to the fiber 22. A double-sided mirror 28 is movable from a first position for redirecting the beam (as shown) to a second position clear of the beam path (shown in phantom) to permit the beam to pass through the filter assembly and couple to the fiber 22 without being dropped. A receiver 32 is positioned to receive light reflected by the reflective element 28 to drop a channel having a wavelength λ1. A transmitter 30 is positioned to transmit a new channel corresponding to λ1 as an add channel to be coupled by the reflective element 28 into the filter assembly 24.

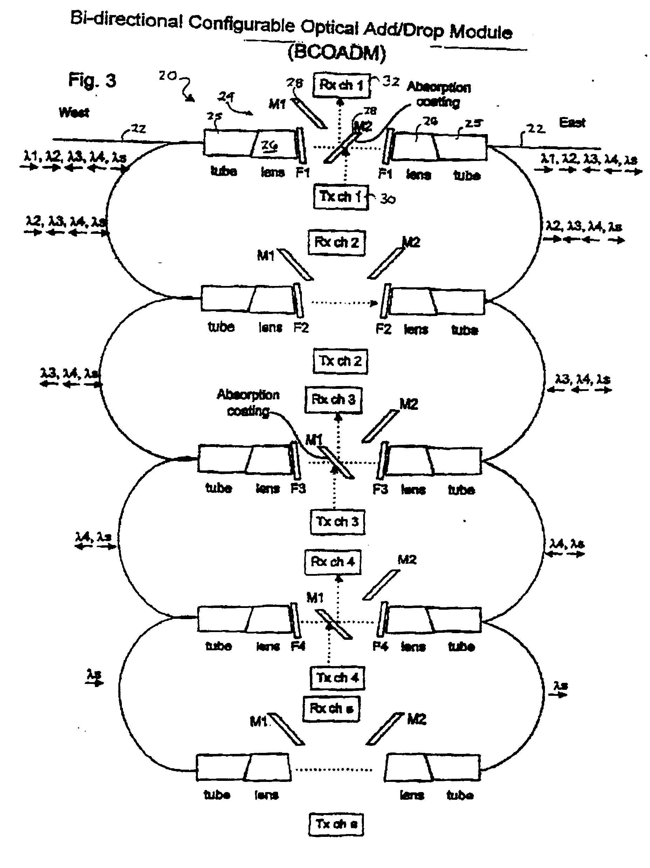

Figure 3 illustrates a configurable add/drop circuit according to the present invention, shown generally at 20. In this configuration wavelengths λ1, λ2 and supervision signal λs are travelling from west to east through fiber 22. At the same time, wavelengths λ3 and λ4 are travelling from east to west. A series of filter assemblies 24 are provided including a pair of fiber tubes 25, and a pair of lenses 26 with wavelength specific filters, F1 - F4 between them. Two wavelength specific filters F1 - F4 having the same wavelength response are provided in each filter assembly 24 with a separation between them. Within the separation is a movable reflective means 28, such as a double-sided mirror as illustrated. The reflective means 28 is selectively operable to provide a splicing means for dropping a channel and optionally simultaneously adding a channel. With the filter assembly 24 split, it can be seen that fewer tubes and lenses are required to couple the add and drop ports 30, 32. A double sided mirror with both reflective surfaces substantially parallel, positioned at 45 degrees to the travel of the beam, can simultaneously redirect both a drop channel and an add channel. If the reflective means 28 is moved from the beam path, light of the filtered channel can pass directly through the filter assembly 24.

A double-sided mirror 28 would, for example, retract in a sliding motion as illustrated, or pivot about a point above or below the beam path, to move clear of the beam to allow the channel to pass without being redirected to the drop port. In filter assembly 24 for the first channel (F1) the reflective means 28 (M2) is in position to redirect a first channel having a wavelength λ1 travelling from west to east, to a drop receiver 32, and to add a new channel λ1 at the transmitter 30. In the filter assembly 24 for the second channel (F2), the reflective means 28 (M1 and M2) are retracted from the beam path to allow channel having a wavelength λ2 to pass through the filter assembly 24. Filter assemblies 24 for the third and fourth channels (F3 and F4) show reflective means 28 (M1) in position to drop channels having wavelengths λ3 and λ4 travelling from east to west, and to add new channels corresponding to the wavelengths dropped.

Mechanical positioning of the reflective means must be precise. Small errors in angular position can result in partial or complete misalignment of the beam with the receiver in the drop line, or coupling the add channel to the main waveguide fiber. Precise mirror control is known and relied upon in a number of optical switching devices. Mirrors also provide advantages of low cross-talk, since the mirror provides complete blocking, good repeatability, and substantial insensitivity to temperature.

Another reflective means is an opto-electronic medium which would provide a reflective grating, or the like, in response to an electrical input, and be transmissive at low energy levels. An electrically switchable reflective grating is disclosed in United States patent no. 5,255,332 issued to SDL, Inc. comprising a monolithic semi-conductive structure with incorporated gratings biased by a voltage input to provide a Bragg condition in a reflective state and reversed to a transmissive state. However, the loss in this device is very high and it would be difficult to implement in the present invention. Developments in this area, or other new materials, could be used to advantage in the present invention.

In place of a double-sided mirror, separate mirrors may be provided for the add port and the drop port, which are independently controllable, and positioned to couple with the add transmitter or drop receiver. It is not be necessary for separate mirrors to be parallel depending on the position of the add transmitter and the drop receiver.

A wavelength specific filter Fk transmits a signal with the wavelength λk corresponding to channel k, where k is 1, 2, 3 or 4. Light passing through a first filter Fk is reflected by reflective means 28 and directed to a drop receiver 32. Simultaneously, a new channel k may be added by add transmitter 30 which is reflected by the reflective means 28 and coupled to the fiber 22 alter passing through a second wavelength specific filter Fk. Filters used in this application are generally dieletric bandpass filters.

Light which does not pass through the wavelength specific filter Fk is reflected and directed to the next filter assembly 24. Each channel is successively removed or passed through the filter specific to its wavelength. Dropped channels may be replaced by new added channels. On the output side of the filter assemblies 24, the output channels are directed from each of the filter assemblies 24, and other channels are reflected in the same waveguide, sequentially, collecting each of the channels to couple to the waveguide 22. A supervisory channel having a wavelength λs also includes mirrors 28, transmitter 30 and receiver 32 to permit a drop or add channel, since there is a need to drop and add the supervisory channel in a transmission system with optical amplifiers. No wavelength specific filter is provided to the supervisory channel in this embodiment. However, a similar identical filter assembly 24 could be provided for the supervisory channel. Alternatively a supervisory channel λs may be provided without filters or transmitters, which bypasses the filter assemblies and passes on to fiber 22 unchanged, and without interruption.

Each channel can be switched between pass through, drop or drop and add new a new channel. These options are independent for each channel.

Since a newly added signal provided by a transmitter may have a greater intensity than other signals corresponding to other channels, it may be convenient to incorporate an attenuator, such as an absorptive coating on the reflective surface to reduce the power of the newly added channel. Advantageously, different coatings, or a series of different coating thicknesses may be applied to the mirror to provide different attenuating levels. A sliding mirror may have a number of positions corresponding to a range of attenuation levels, for instance from no coating, to a significant attenuation level. In this way a tunable attenuator may be incorporated.

Similarly, the add/drop may provide amplification to a selected signal.

To reconfigure a circuit for a channel to propagate in the opposite direction the reflective means 28 may be rotated 90 degrees to reflect light from the input port of the filter 24 (fiber 22 and lens 26) to the drop receiver 32 and couple light from the add transmitter 30. Alternatively, two mirrors may be used alternately, as shown in Figure 3, each positioned 90 degrees from the other. Alternatively, the add and drop positions may be reversed. The input and output (22, 26) are reversible as the circuit configuration is symmetrical. All filtering occurs in the same sequence in both directions. Since the network will usually be permanently established regarding which channels propagate in each direction, these configuration requirements will likely be made at the time of installation. Other systems may require a reversible configuration. This bi-directional configurable add/drop circuit offers greater flexibility to the network designer, providing the ability to change the direction of transmission and configuration of individual channels for existing systems. Actuators can be provided to rotate the mirror or to position a different sliding mirror. Since this type of system change would likely not occur dynamically during operation, only accuracy is critical to the actuator, not speed.

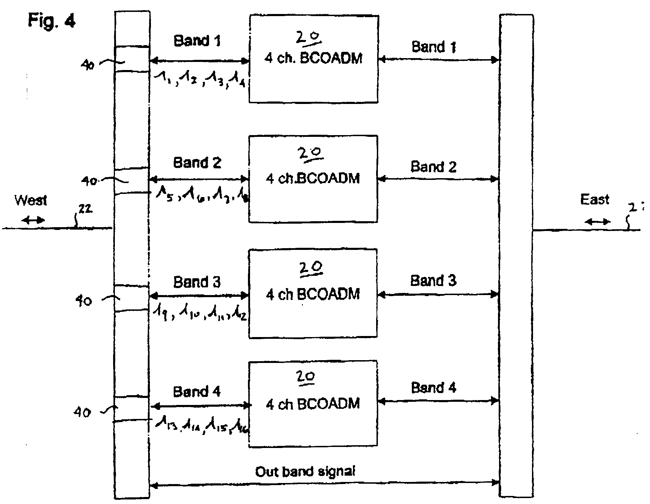

As seen in Figure 4 generally at 100, the circuit 20 of Figure 2 can be arranged in parallel as modules with a number of broadband filters 40 to separate several channels into separate bands to control a broad spectrum of channels. Sixteen channels are independently configurable as shown. Multiple channels are first separated, for example into four channel bands as illustrated. Each band is passed through a configurable add/drop module 20, as shown in Figure 2. An out band supervising channel is again passed without modification or interruption. More complicated bi-directional configurable add/drop circuits, including large numbers of channels, can be realized similarly using the present invention.

Numerous other embodiments will be apparent to persons of skill in the art, without departing from the spirit and scope of the invention as defined in the appended claims.

## Claims

1. A configurable add/drop optical circuit, comprising:
an optical filter arrangement comprising:
a pair of spaced apart substantially collimating lenses, the lenses having optical waveguides optically coupled thereto;
a filter optically coupled with an inwardly facing end face of each of the spaced apart lenses, said filters having a substantially same wavelength response; and,
a movable reflective optical element disposed between the filters.

2. A configurable add/drop optical circuit as defined in claim 1 comprising a plurality of said optical filter arrangements optically coupled to one another.

3. A configurable add/drop optical circuit as defined in claim 1, wherein the reflective optical element is movable between a first position reflecting a beam of light from the filter arrangement, and a second position passing a beam of light through said filter arrangement.

4. A configurable add/drop optical circuit as defined in claim 3, wherein the reflective optical element further selectively couples a signal into the optical filter arrangement in a first position.

5. A configurable add/drop optical circuit as defined in claim 1, wherein the circuit is symmetrical permitting uni-directional or bi-directional operation.

6. A configurable optical filtering add/drop optical circuit comprising:
an input waveguide;
an output waveguide optically coupled thereto;
at least one wavelength sensitive filter assembly for passing at least a predetermined wavelength of light optically coupling the input waveguide with the output waveguide;
a bypass waveguide for transmitting at least one channel reflected by the at least one filter assembly to the output waveguide; and
a reflective means for selectively redirecting a wavelength of light passed through the filter, or allowing the channel to propagate to the output waveguide.

7. An optical filtering system comprising:
a pair of optical waveguides for carrying a signal, comprised of a plurality of wavelengths corresponding to a plurality of channels, in a single or opposite directions;
at least one filter assembly means, for optically coupling the pair of optical waveguides,
a receiver for receiving at least one of the channels;
a transmitter for adding a signal corresponding to one of the channels to the system;
said filter assembly having a first port associated with one of the waveguides and a second port associated with the other waveguide; a pair of wavelength specific filters for transmitting a selected channel and reflecting the others; and movable redirecting means between the first and second ports for redirecting a channel passed through a filter from the waveguide through the first port to the receiver, and for optionally redirecting a new channel from the transmitter to the second port to couple with the associated waveguide;
whereby the redirecting means is selectively operative between a first position to pass a signal between the first and second ports, and a second position to redirect a signal.

8. An optical filtering system as defined in claim 7, wherein the system is symmetrical permitting uni-directional or bi-directional operation.

9. An optical filtering system as defined in claim 8, wherein the first port and second port comprise an input port and an output port defined by the direction of propagation of an individual channel.

10. An optical filtering system as defined in claim 9, wherein the redirecting means comprises reflective means for redirecting a channel from the input port to the receiver, and reflective means for coupling a channel from the transmitter to the output port.

11. An optical filtering system as defined in claim 10, wherein the reflective means comprises a first reflective surface for redirecting a channel to the drop channel receiver, and a second reflective surface for redirecting a channel from the transmitter.

12. An optical filtering system as defined in claim 11, wherein the second reflective surface includes an absorptive coating to attenuate the signal from the transmitter.

13. An optical filtering system as defined in claim 12, wherein the absorptive coating comprises a number of coatings to provide a number of attenuation levels, corresponding to different positions of the reflective means, thereby providing a tunable attenuator.

14. An optical filtering system as defined in claim 11, wherein said first and second reflective surfaces comprise opposite surfaces of a double sided mirror.

15. An optical filtering system as defined in claim 7, further including bypass means for transmitting additional channels, reflected by the filter assembly means, from one waveguide to the other.

16. An optical filtering system comprising:
a waveguide for transmitting a signal comprising a plurality of wavelengths corresponding to a plurality of channels;
a series of wavelength specific filter assemblies interrupting signal transmission on the waveguide for sequentially isolating a number of the plurality of channels;
said filter assemblies comprising:
input port for receiving the signal from the waveguide;
first wavelength specific filter means for passing a desired channel and reflecting the remaining channels from the input port;
reflective means selectively operable to couple an isolated channel with a drop receiver and optionally to couple a new channel from an add transmitter;
second wavelength specific filter means for passing a desired channel to a output port coupled with the waveguide and for reflecting other channels to couple with the waveguide.

17. An optical filtering system comprising:
a waveguide for carrying a signal comprised of a plurality of wavelengths corresponding to a plurality of channels;
a number of broadband filters arranged sequentially, each for passing a portion of the plurality of channels and reflecting the others to a next sequential broadband filter;
a configurable add/drop circuit associated with each broadband filter including a wavelength specific filter assembly for each channel of the portion passed by the broadband filter, said filter assembly comprising:
a pair of spaced apart substantially collimating lenses, the lenses having optical waveguides optically coupled thereto;
a filter optically coupled with an inwardly facing end face of each of the spaced apart lenses, said filters having a substantially same wavelength response; and,
a movable reflective optical element disposed between the filters.
